(19) Europäisches Patentamt
European Patent Office
Office européen des brevets

(11) **EP 4 075 646 A1**

(12) **EUROPEAN PATENT APPLICATION**
published in accordance with Art. 153(4) EPC

(43) Date of publication:
**19.10.2022 Bulletin 2022/42**

(21) Application number: **21740742.8**

(22) Date of filing: **05.01.2021**

(51) International Patent Classification (IPC):
**H02K 16/02** (2006.01) **F16F 15/18** (2006.01)

(52) Cooperative Patent Classification (CPC):
**F16F 15/18; H02K 16/02**

(86) International application number:
**PCT/JP2021/000070**

(87) International publication number:
**WO 2021/145232 (22.07.2021 Gazette 2021/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.01.2020 JP 2020005442**

(71) Applicant: **Mitsubishi Heavy Industries, Ltd.
Tokyo 100-8332 (JP)**

(72) Inventors:
• **HAYASHI, Kentaro
Tokyo 100-8332 (JP)**
• **OHIRA, Takeo
Tokyo 100-8332 (JP)**
• **YUGE, Atsushi
Tokyo 100-8332 (JP)**

(74) Representative: **Hoffmann Eitle
Patent- und Rechtsanwälte PartmbB
Arabellastraße 30
81925 München (DE)**

(54) **MAGNETIC GEARED ROTATING ELECTRICAL MACHINE AND MANUFACTURING METHOD**

(57) A magnetic geared rotating electrical machine is provided with a stator, a low-speed rotor which includes a plurality of pole pieces arranged in a circumferential direction of the stator and is installed inside the stator, a high-speed rotor which includes a plurality of second magnets as magnets facing the plurality of pole pieces and is installed inside the low-speed rotor, a first piezoelectric element which is provided in each of the plurality of pole pieces and which converts a vibration into an electric signal, and a control unit which is connected to the first piezoelectric element and performs vibration damping of the pole piece on the basis of an output voltage of the first piezoelectric element.

FIG. 1

EP 4 075 646 A1

**Description**

Technical Field

The present disclosure relates to a magnetic geared rotating electrical machine and a manufacturing method.
Priority is claimed on Japanese Patent Application No. 2020-005442, filed January 16, 2020, the content of which is incorporated herein by reference.

Background Art

When extracting electric power from a relatively low-speed rotation such as a wind power generator, a method of rotating a generator via a power transmission mechanism such as a speed increaser is known (for example, see Patent Document 1). On the other hand, since the power transmission mechanism is provided with a plurality of gears, the generator increases in size when the power transmission mechanism is applied to the generator. Therefore, in recent years, the adoption of a smaller magnetic geared rotating electrical machine has been considered in place of the combination of the power transmission mechanism and the generator.

Citation List

Patent Document(s)

Patent Document 1: Japanese Unexamined Patent Application, First Publication No. 2005-091103

Summary of Invention

Technical Problem

In the magnetic geared rotating electrical machine, a plurality of pole pieces (magnet pieces) is provided in a rotating low-speed rotor. The pole piece is a beam-shaped structure in which both ends of a support ring forming both ends of the low-speed rotor are pin-joined or rigidly joined. Therefore, the pole piece is vibrated under the influence of the magnetic field of the stator and the low-speed rotor in accordance with the rotation of the low-speed rotor. This vibration can lead to damage to the pole piece and is a bottleneck in the durability of the magnetic geared rotating electrical machine.
An object of the present disclosure is to provide a magnetic geared rotating electrical machine and a manufacturing method that solve the above-described problems.

Solution to Problem

A magnetic geared rotating electrical machine according to the present disclosure includes a stator, a low-speed rotor which includes a plurality of pole pieces arranged in parallel in a circumferential direction of the stator and is installed inside the stator, a high-speed rotor which includes a plurality of second magnets as magnets facing the plurality of pole pieces and is installed inside the low-speed rotor, a first piezoelectric element which is provided in each of the plurality of pole pieces and which converts a vibration into an electric signal, and a control unit which is connected to the first piezoelectric element and performs vibration damping of the pole piece on the basis of an output voltage of the first piezoelectric element.
A manufacturing method for a magnetic geared rotating electrical machine according to the present disclosure is a manufacturing method for a magnetic geared rotating electrical machine including a stator, a low-speed rotor which includes a plurality of pole pieces arranged in a circumferential direction of the stator and is installed inside the stator, and a high-speed rotor which includes a plurality of second magnets as magnets facing the plurality of pole pieces and is installed inside the low-speed rotor, the manufacturing method includes providing a piezoelectric element converting a vibration into an electric signal in each of the plurality of pole pieces; and providing a control unit connected to the piezoelectric element and performing vibration damping of the pole piece on the basis of an output voltage of the piezoelectric element.

Advantageous Effects of Invention

According to at least one aspect of the above-described aspects, it is possible to improve the durability of the magnetic geared rotating electrical machine by attenuating the vibration of the low-speed rotor in the magnetic geared rotating electrical machine.

Brief Description of Drawings

FIG. 1 is a diagram showing a configuration of a magnetic geared rotating electrical machine according to an embodiment.
FIG. 2 is a cross-sectional view of the magnetic geared rotating electrical machine when the magnetic geared rotating electrical machine according to an embodiment is operated.
FIG. 3 is an example of a cross-sectional view of the magnetic geared rotating electrical machine when the magnetic geared rotating electrical machine according to an embodiment is operated.
FIG. 4 is a diagram showing a piezoelectric element and a control unit according to an embodiment.
FIG. 5 is a diagram showing the piezoelectric element and the control unit according to an embodiment.
FIG. 6 is a diagram showing a pseudo-inductance circuit according to an embodiment.
FIG. 7 is a graph showing a temperature and a capacitance value according to an embodiment.
FIG. 8 is a diagram showing the piezoelectric element and the control unit according to an embodiment.
FIG. 9 is a diagram showing a flowchart according to an embodiment.
FIG. 10 is a cross-sectional view of the magnetic geared rotating electrical machine when the magnetic geared rotating electrical machine according to an embodiment is operated.
FIG. 11 is a cross-sectional view of the magnetic geared rotating electrical machine when the magnetic geared rotating electrical machine according to an embodiment is operated.
FIG. 12 is a schematic block diagram showing a configuration of a computer according to at least one embodiment.

Description of Embodiments

First embodiment

(Configuration of magnetic geared rotating electrical machine)

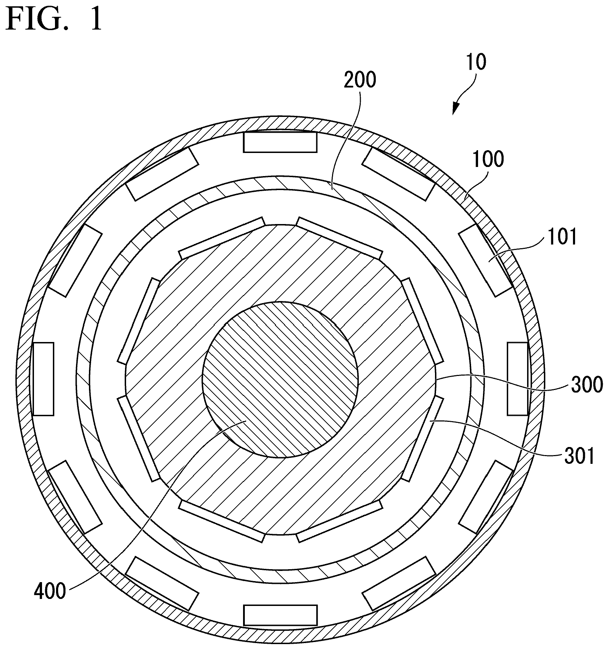

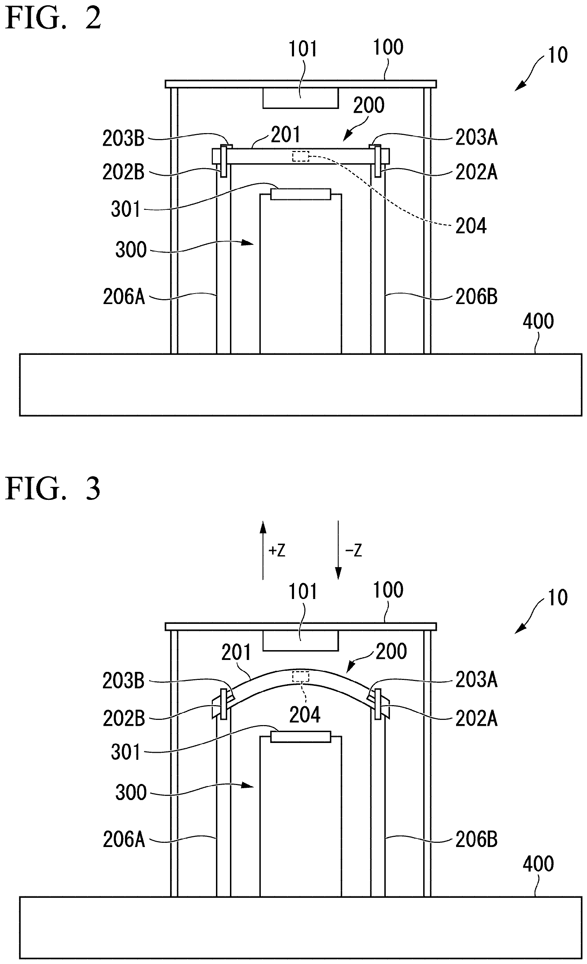

Hereinafter, a first embodiment will be described in detail with reference to the drawings. FIG. 1 is a diagram showing a configuration of a magnetic geared rotating electrical machine 10 according to the first embodiment. The magnetic geared rotating electrical machine 10 includes a stator 100, a low-speed rotor 200, a high-speed rotor 300, and a rotating shaft 400. The stator 100, the low-speed rotor 200, and the high-speed rotor 300 are provided concentrically with respect to the rotating shaft 400.
Examples of the magnetic geared rotating electrical machine 10 include a magnetic geared motor and a magnetic geared generator.
The stator 100 is disposed on the outside of the low-speed rotor 200 and the high-speed rotor 300. The stator 100 includes a plurality of first magnets 101 which are arranged in the circumferential direction of the stator 100. Examples of the magnet include a permanent magnet and an electromagnet. For example, the stator 100 shown in FIG. 1 includes twelve first magnets 101 which are electromagnets.
Additionally, hereinafter, the number of parts may be shown in FIG. 1, but this is just an example. The number of each part may be different in other embodiments. The first magnet 101 is formed of an iron core and a coil (not shown). A three-phase alternating current is supplied to the coil of the first magnet 101 as a drive current from an external drive device (for example, an inverter). The first magnet 101 is provided so that the polarities on the side facing the low-speed rotor 200 are the same poles, for example, the S poles.
The low-speed rotor 200 is disposed between the stator 100 and the high-speed rotor 300. FIG. 2 is a cross-sectional view of the magnetic geared rotating electrical machine 10. The low-speed rotor 200 includes a first support ring 206A, a second support ring 206B, and a plurality of pole pieces 201. For example, the low-speed rotor 200 includes thirty-two pole pieces 201. The first support ring 206A and the second support ring 206B are disk-shaped members that support both ends of the low-speed rotor 200. The first support ring 206A and the second support ring 206B are fixed to the rotating shaft 400 and rotate together with the rotating shaft 400.
The plurality of pole pieces 201 are arranged at equal intervals around the shaft. Each pole piece 201 is provided with a magnet. The magnet provided on the pole piece 201 is arranged so that the polarity on the side facing the stator 100 is the same pole as that of the first magnet 101, for example, the S pole. In each of the plurality of pole pieces 201, both ends of the pole piece 201 are respectively fixed to the first support ring 206A and the second support ring 206B via a fixture 202. When the fixture 202 is formed as a pin, the pin-like fixtures 202 are attached to the four corners of the pole piece 201. The low-speed rotor 200 includes a fixture 202A and a fixture 202B as the fixtures 202 for each pole piece 201. That is, the low-speed rotor 200 includes sixty-four fixtures 202.

each of the pole piece 201 includes first piezoelectric elements 203 and a control unit 204. The first piezoelectric elements 203 are provided in the vicinity of the fixture 202 in the pole piece 201. More specifically, the first piezoelectric elements 203 are provided to straddle a line segment connecting the two pins of the fixture 202A (or the fixture 202B) so that the center thereof is located closer to the center of the pole piece 201 than the line segment. This position is a part of the pole piece 201 where the strain is most generated by the rotation of the low-speed rotor 200. A first piezoelectric element 203A and a first piezoelectric element 203B, which are the first piezoelectric elements 203, are provided for each pole piece 201. That is, the low-speed rotor 200 is provided with sixty-four first piezoelectric elements 203. The first piezoelectric elements 203 is configured to convert the vibration of the pole piece 201 into an electric signal.

FIG. 3 is an example of a cross-sectional view of the magnetic geared rotating electrical machine 10 when the magnetic geared rotating electrical machine 10 is operated. That is, FIG. 3 is an example of a cross-sectional view of the magnetic geared rotating electrical machine 10 when the stator 100, the low-speed rotor 200, and the high-speed rotor 300 constituting the magnetic geared rotating electrical machine 10 rotate. As shown in FIG. 3, when the magnetic geared rotating electrical machine 10 is operated, the center portion of the pole piece 201 moving away from the fixture 202 by the magnetic force and the centrifugal force of the stator 100 and the high-speed rotor 300 is distorted in the Z direction in the pole piece 201. In this way, when the magnetic geared rotating electrical machine 10 rotates, a force is applied to the pole piece 201 in the Z direction so that the pole piece 201 is vibrated in the +Z direction and the -Z direction.

As shown in FIG. 3, when the pole piece 201 is distorted, the electric signal converted from the vibration accompanied by the distortion can be maximized by the first piezoelectric element 203 by providing the first piezoelectric element 203 in the vicinity of the fixture 202 where the distortion is maximized. The first piezoelectric element 203 is provided in the vicinity of the fixture 202 as shown in FIG. 2 but can also be installed at another position where distortion of a predetermined value or more is estimated to occur. The predetermined value is set to, for example, a value obtained by subtracting a predetermined margin from the maximum value in the magnitude of the distortion estimated to occur in the pole piece 201.

The high-speed rotor 300 is disposed inside the stator 100 and the low-speed rotor 200. The high-speed rotor 300 includes a plurality of second magnets 301 facing the first magnets 101. Examples of the second magnet 301 include a second magnet 301S having an S pole and a second magnet 301N having an N pole which are permanent magnets. The same number of the second magnets 301S and the second magnets 301N are provided. For example, the high-speed rotor 300 shown in FIG. 1 includes four second magnets 301S and four second magnets 301N. Further, the second magnet 301N and the second magnet 301S are alternately arranged.

The rotating shaft 400 is disposed inside the stator 100, the low-speed rotor 200, and the high-speed rotor 300.

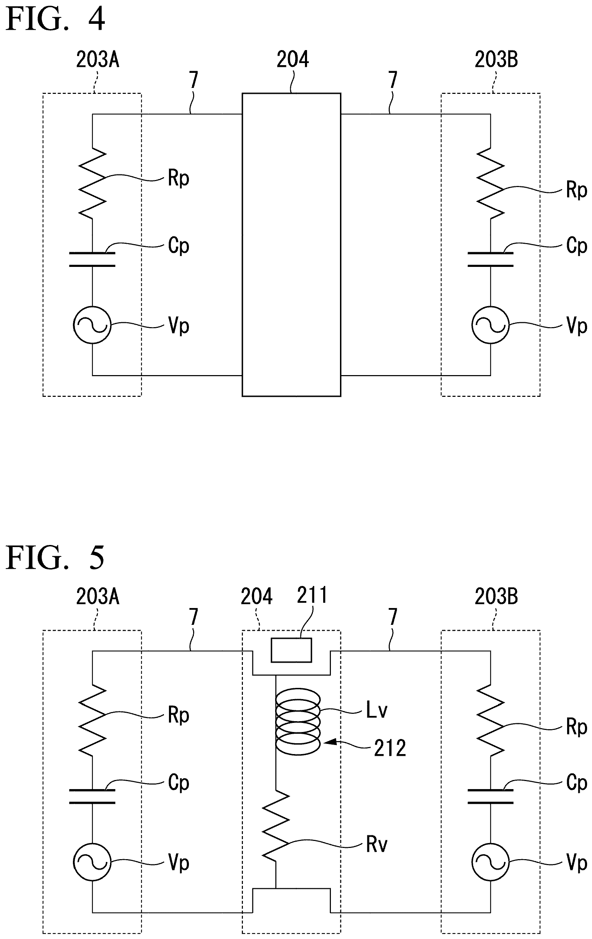

The first piezoelectric element 203 is connected to the control unit 204 by a wiring 7. The control unit 204 is connected to the first piezoelectric element 203 to form a closed circuit and outputs a current to simulate a virtual impedance on the basis of the output voltage which is the electric signal of the first piezoelectric element 203. Specifically, when the first piezoelectric element 203 is expressed by using an equivalent circuit, the closed circuit has a configuration shown in FIG. 4. Additionally, FIG. 4 shows an example in which the first piezoelectric element 203 is equivalently expressed by using an equivalent resistance component $R_p$, an equivalent capacitance component $C_p$, and an equivalent AC voltage source $V_p$. Since the first piezoelectric element 203 includes a capacitance component, the equivalent circuit includes the equivalent capacitance component $C_p$. The first piezoelectric element 203 can be expressed as an equivalent circuit in which the equivalent resistance component $R_p$, the equivalent capacitance component $C_p$, and the equivalent AC voltage source $V_p$ are connected in series.

The control unit 204 is operated so that the closed circuit composed of the first piezoelectric element 203 and the control unit 204 behaves as a resonance circuit that resonates at the natural frequency of the pole piece 201. Specifically, in the closed circuit shown in FIG. 4, it is possible to perform vibration damping by setting an appropriate impedance state inside the control unit 204 with respect to the impedance (particularly, the equivalent capacitance component $C_p$) of the first piezoelectric element 203. Hereinafter, the impedance virtually simulated inside the control unit 204 is called the virtual impedance.

In the control unit 204, an output current is adjusted so that the desired impedance is simulated as the virtual impedance. That is, the internal impedance when the control unit 204 is viewed from the outside is adjusted by adjusting the output current. The output of the current is realized by, for example, a current source (for example, a voltage control current source) or the like.

The control unit 204 includes a controller 211 and a pseudo-inductance circuit 212. In this embodiment, the controller 211 estimates the equivalent capacitance component $C_p$ of the first piezoelectric element 203 on the basis of the output voltage of the first piezoelectric element 203. The controller 211 outputs a current to the pseudo-inductance circuit 212 so that the estimated equivalent capacitance component $C_p$ and the virtual impedance in the first piezoelectric element 203 constitute the resonance circuit of the resonance frequency which is the same as the natural frequency of the pole piece 201. That is, the controller 211 outputs a current to the pseudo-inductance circuit 212 to realize the virtual impedance having an appropriate inductance component $L_v$. In the closed circuit, the LC series resonance circuit is configured by adjusting the virtual impedance.

Specifically, the pseudo-inductance circuit 212 outputs a current so that the virtual impedance constitutes the LR shunt circuit as shown in FIG. 5. By configuring the closed circuit as shown in FIG. 5, an RLC parallel circuit is configured. In this way, it is possible to reduce the inductance value required for the circuit and to miniaturize the inductance component $L_v$ by setting the parallel circuit for two first piezoelectric elements 203A and 203B.

Then, the inductance component $L_v$ of the virtual impedance is adjusted so that the resonance frequency $f_r$ of the RLC parallel circuit becomes the same as the natural frequency $f_n$ of the pole piece 201. That is, the inductance component $L_v$ of the virtual impedance is set so that the following relational expression is established. (Formula. 1)

$$f_r = \frac{1}{2\pi\sqrt{L_v 2C_p}} = f_n \qquad \cdots (1)$$

In the formula (1), $f_n$ is a natural frequency and is set in advance according to the member (pole piece 201) which is a vibration damping object. Further, in the formula (1), $2C_p$ is a value obtained by adding the equivalent capacitance component $C_p$ of the first piezoelectric element 203A to the equivalent capacitance component $C_p$ of the first piezoelectric element 203B. The equivalent capacitance components $C_p$ of the first piezoelectric element 203A and the first piezoelectric element 203B are estimated by the method to be described below. The inductance component $L_v$ is specified by using the formula (1).

Since the inductance component $L_v$ in the virtual impedance is determined in this way, it is possible to constitute the resonance circuit according to the natural frequency of the vibration damping object by the closed circuit of the first piezoelectric element 203 and the control unit 204. Therefore, the reactance component of the closed circuit can be set to 0 (or reduced) at the resonance frequency (and including the periphery of the resonance frequency) and the vibration energy at the resistance component ($R_p$ or $R_v$) can be efficiently consumed as heat energy. Therefore, it is possible to perform vibration damping.

That is, in the vibration damping method using the resonance circuit, it is possible to effectively perform vibration damping at the resonance frequency and around the resonance frequency. When a large inductance value is required for the natural frequency of the vibration damping object, the element may become large if the inductance value is realized by a passive element, but an increase in size of the element can be suppressed by realizing the inductance component Lp as the virtual impedance. Further, although the accuracy of the passive element varies, the accuracy can be expected to be improved because the inductance component Lp is virtually realized.

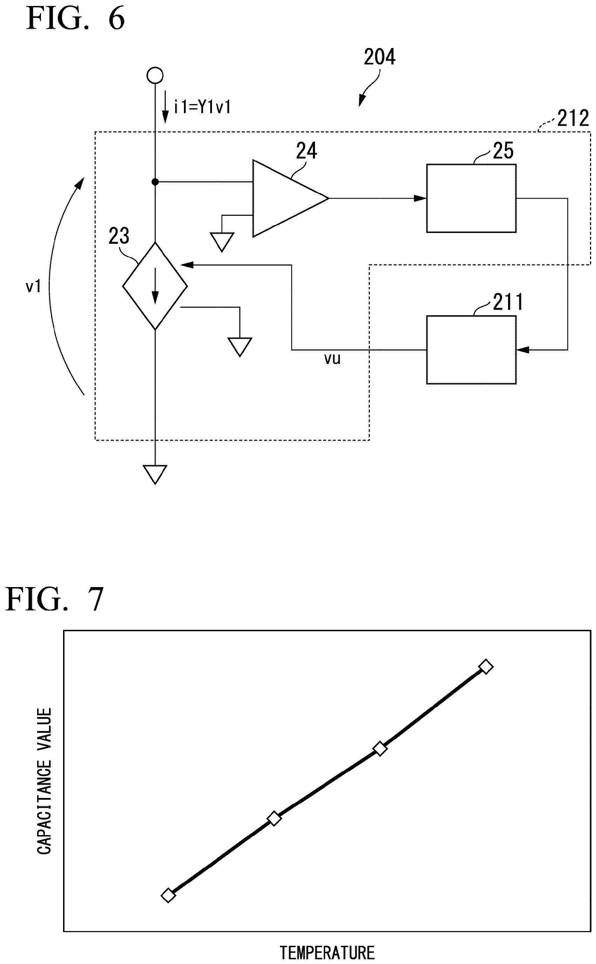

Here, a configuration example of the pseudo-inductance circuit 212 will be described. FIG. 6 is a diagram showing the configuration example of the pseudo-inductance circuit 212.

The pseudo-inductance circuit 212 includes a current source (voltage control current source) 23, a voltage follower (instrumentation amplifier) 24, and a low-pass filter (LPF) 25. The pseudo-inductance circuit 212 constitutes the closed circuit together with the first piezoelectric element 203.

The input terminal of the pseudo-inductance circuit 212 is connected to the input end of the current source 23 and the input end of the voltage follower 24. The output end of the voltage follower 24 is connected to the input end of the LPF 25. The output end of the LPF 25 is connected to the controller 211. That is, the controller 211 acquires a signal of a low-frequency component of the output voltage of the piezoelectric element. The output end of the current source 23 is connected to the output terminal of the pseudo-inductance circuit 212. The output current of the current source 23 is controlled by the controller 211.

In order to form the resonance circuit by the closed circuit with the first piezoelectric element 203, the pseudo-inductance circuit 212 needs to behave to have the inductance component $L_v$ based on the formula (1). That is, the closed circuit of the first piezoelectric element 203 and the pseudo-inductance circuit 212 constitutes the resonance circuit in such a manner that the controller 211 outputs a current $i_1 = Y_1 v_1$ (here, admittance $Y_1 = -j/\omega L$) to the pseudo-inductance circuit 212 when the output voltage $v_1$ of the first piezoelectric element 203 is input to the pseudo-inductance circuit 212.

That is, the controller 211 estimates the capacitance of the first piezoelectric element 203 and calculates the current $i_1$ to satisfy the admittance $Y_1$ to be realized by the pseudo-inductance circuit 212 on the basis of the capacitance.

Next, an example of a method of estimating the equivalent capacitance component $C_p$ of the first piezoelectric element 203 in the control unit 204 will be described. In order to constitute the resonance circuit, it is necessary to estimate the equivalent capacitance component $C_p$. However, the characteristics of the first piezoelectric element 203 may change depending on the usage environment such as temperature and the equivalent capacitance component $C_p$ may also change. FIG. 7 is a diagram showing an example of a relationship between the temperature and the equivalent capacitance component $C_p$ in the first piezoelectric element 203. As shown in FIG. 7, the equivalent capacitance com-

ponent $C_p$ tends to increase in accordance with an increase in temperature. In order to grasp an appropriate equivalent capacitance component $C_p$ according to the usage environment, the control unit 204 estimates the equivalent capacitance component $C_p$.

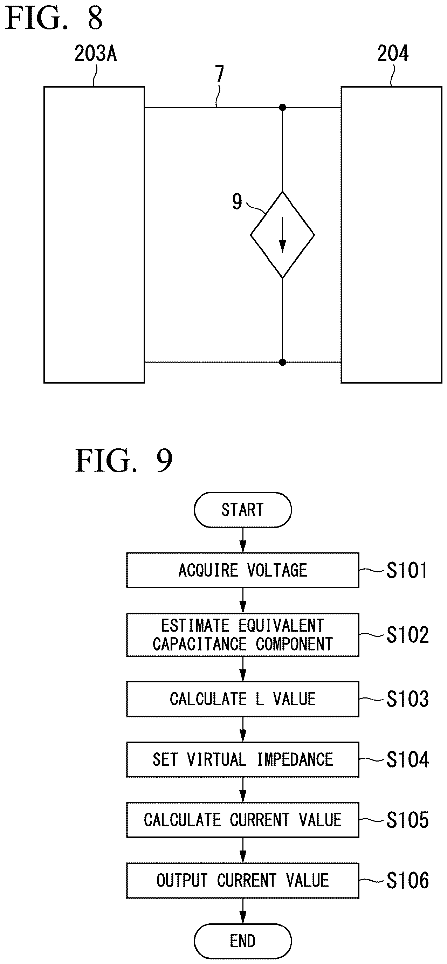

Therefore, as shown in FIG. 8, a current output unit 9 is provided in parallel to the control unit 204 in the circuit composed of the first piezoelectric element 203A and the control unit 204. The current output unit 9 outputs a predetermined additional current. That is, the current output unit 9 is a current source and an additional current for estimating the equivalent capacitance component $C_p$ is passed through the closed circuit. In the control unit 204, when the additional current is supplied to the first piezoelectric element 203A, the equivalent capacitance component $C_p$ is estimated on the basis of the current flowing through the first piezoelectric element 203A and the output voltage of the first piezoelectric element 203A. As described above, the current output unit 9 is also provided in the circuit composed of the first piezoelectric element 203B and the control unit 204 and a predetermined load current is output.

Specifically, the current output unit 9 outputs an additional current having a frequency different from that of the current (vibration damping current) output from the control unit 204. For example, the frequency of the additional current is set to a value lower than the frequency of the vibration damping current. There is a difference between the frequency of the vibration damping current and the frequency of the additional current so that the frequency component of the additional current can be separated by, for example, a low-pass filter or a bandpass filter. Additionally, the frequency of the additional current may be set to a value higher than the frequency of the vibration damping current.

That is, in the circuit of FIG. 8, the additional current and the output voltage of the first piezoelectric element 203 corresponding to the additional current can be separated from other current voltage components. Therefore, the control unit 204 can estimate the equivalent capacitance component $C_p$ on the basis of the additional current and the output voltage of the first piezoelectric element 203 corresponding to the additional current. For example, when the additional current is $i_s$ and the output voltage of the first piezoelectric element 203 corresponding to the additional current $i_s$ is va in the circuit of FIG. 8, the relationship of the following formula (2) is established. Therefore, the equivalent capacitance component $C_p$ of the first piezoelectric element 203 can be estimated on the basis of the relation of the formula (2).

(Formula. 2)

$$v_a(t) = \frac{1}{C_p} \int -i_s(t)\, dt \qquad \cdots (2)$$

It is possible to estimate the equivalent capacitance component $C_p$ even while damping by passing the additional current separately from the vibration damping current. That is, the vibration damping and the estimation of the equivalent capacitance component $C_p$ can be performed in parallel and the estimated equivalent capacitance component $C_p$ can be reflected in the vibration damping (parallel process). Further, the vibration damping and the estimation of the equivalent capacitance component $C_p$ may be performed in a time-division manner (serial process).

(Flow of process by vibration damping system)

Next, an example of a vibration damping process by the above-described vibration damping system will be described with reference to FIG. 9. FIG. 9 is a flowchart showing an example of a procedure of the vibration damping process according to this embodiment. The flow shown in FIG. 9 is repeatedly performed at a predetermined control cycle, for example, when the vibration damping object is operated. Additionally, the process of FIG. 9 may be repeatedly executed at a predetermined control cycle when a structure (for example, the magnetic geared rotating electrical machine 10) equipped with a vibration damping object is operated even when the vibration damping object is not operated (for example, in a stop state or the like).

First, the output voltage of the first piezoelectric element 203 is acquired (S101). Additionally, the output voltage becomes the output voltage of the first piezoelectric element 203 corresponding to the additional current.

Next, the equivalent capacitance component $C_p$ is estimated on the basis of the additional current and the output voltage of the first piezoelectric element 203 corresponding to the additional current (S102). In S102, the equivalent capacitance component $C_p$ is estimated by using, for example, the formula (2).

Next, the inductance component (L value) of the virtual impedance is calculated on the basis of the estimated equivalent capacitance component $C_p$ (S103). In S103, the inductance component $L_v$ is calculated by using, for example, the formula (1).

Next, the impedance (virtual impedance) of the RL shunt circuit is set so that the calculated inductance component $L_v$ becomes the reactance component (S 104). Additionally, the optimum value of the resistance ($R_v$) of the RL shunt circuit is calculated, for example, by the same concept as the fixed point theory of a dynamic vibration absorber.

Next, a current value that realizes the set virtual impedance is calculated (S 105). Then, the current source 23 is controlled and the calculated current value is output (S106).

When the magnetic geared rotating electrical machine 10 is a magnetic geared motor, the high-speed rotor 300 rotates in accordance with the rotation of the low-speed rotor 200. On the other hand, when the magnetic geared rotating electrical machine 10 is a magnetic geared generator, the low-speed rotor 200 rotates in accordance with the rotation of the high-speed rotor 300. In this way, although the operation is different for the case where the magnetic geared rotating electrical machine 10 is the magnetic geared motor or the magnetic geared generator, the vibration of the pole piece 201 due to the rotation of the low-speed rotor 200 occurs in any case. It is possible to attenuate the vibration of the pole piece 201 when the magnetic geared rotating electrical machine 10 is any one of the magnetic geared motor and the magnetic geared generator due to the operation of the magnetic geared rotating electrical machine 10.

(Operation and effect)

The magnetic geared rotating electrical machine 10 according to the present disclosure includes the stator 100, the low-speed rotor 200 which includes the plurality of pole pieces 201 arranged in the circumferential direction of the stator and is installed inside the stator 100, and the high-speed rotor 300 which includes the plurality of second magnets 301 as the magnets facing the plurality of pole pieces 201 and is installed inside the low-speed rotor 200. The magnetic geared rotating electrical machine further includes the first piezoelectric element 203 which is provided in each of the plurality of pole pieces 201 and which converts the vibration into the electric signal, and the control unit 204 which is connected to the first piezoelectric element 203 and performs vibration damping of the pole piece 201 on the basis of the output voltage of the first piezoelectric element 203.

The magnetic geared rotating electrical machine 10 attenuates the vibration of the plurality of pole pieces 201 of the low-speed rotor 200 in the magnetic geared rotating electrical machine 10. Accordingly, it is possible to improve the durability of the magnetic geared rotating electrical machine 10.

Further, in the magnetic geared rotating electrical machine 10, the plurality of first magnets 101 which are arranged in the circumferential direction are installed on the stator 100 or between the stator 100 and the low-speed rotor 200, and each of the first magnets 101 face one of the second magnets 301.

The magnetic geared rotating electrical machine 10 attenuates the vibration of the plurality of pole pieces 201 of the low-speed rotor 200 of the magnetic geared rotating electrical machine 10 including the first magnet 101 in the stator 100. Accordingly, it is possible to improve the durability of the magnetic geared rotating electrical machine 10.

Further, the first piezoelectric element 203 of the magnetic geared rotating electrical machine 10 is provided in the vicinity of the fixture 202 that fixes each of the pole pieces 201 and the low-speed rotor 200.

The first piezoelectric element 203 is provided in the vicinity of the fixture 202 corresponding to a place in which the distortion of the pole piece 201 increases. Accordingly, the magnetic geared rotating electrical machine 10 can improve the vibration damping effect of the first piezoelectric element 203.

Further, the magnetic geared rotating electrical machine 10 includes an electric circuit which is connected to the first piezoelectric element 203 and which is formed as the closed circuit and the control unit 204 controls the electric circuit so that the electric circuits performs as a reactance that cancels the capacitance component of the first piezoelectric element 203 at the resonance frequency of the pole piece 201 on the basis of the electric signal output from the first piezoelectric element 203.

The magnetic geared rotating electrical machine 10 performs vibration damping according to the resonance frequency of the plurality of pole pieces 201 influencing the durability thereof. Accordingly, it is possible to improve the durability of the magnetic geared rotating electrical machine 10.

Second embodiment

Next, the magnetic geared rotating electrical machine 10 according to a second embodiment will be described. The second piezoelectric element 205 is provided in the pole piece 201 of the magnetic geared rotating electrical machine 10 according to the second embodiment and the magnetic geared rotating electrical machine 10 performs vibration damping of the pole piece 201 by using the second piezoelectric element 205.

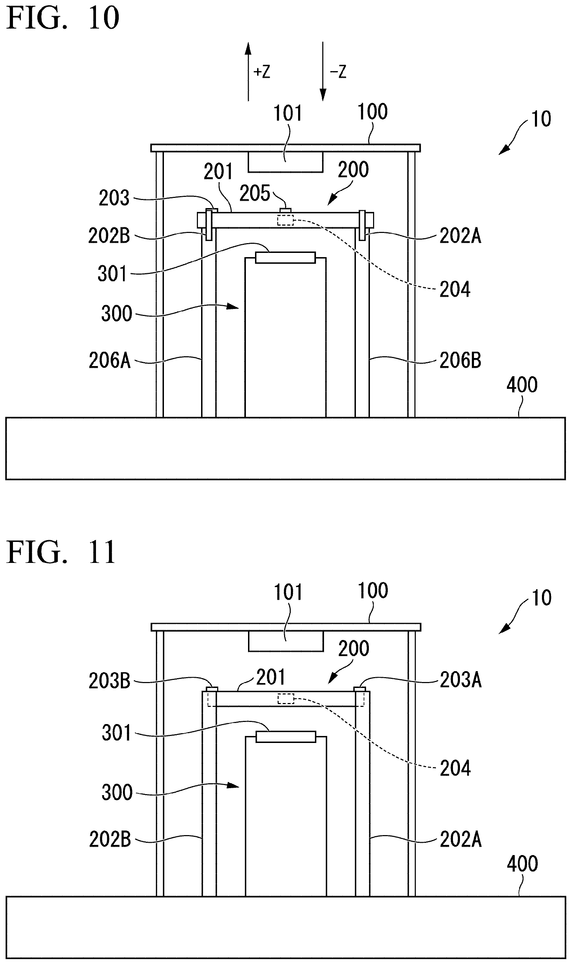

FIG. 10 is a diagram showing a configuration of the magnetic geared rotating electrical machine 10 according to the second embodiment. As shown in FIG. 10, the second piezoelectric element 205 is provided in addition to the first piezoelectric element 203.

The first piezoelectric element 203 transmits the electric signal to the controller 211 of the control unit 204 on the basis of the vibration of the pole piece 201. The controller 211 receives the electric signal from the first piezoelectric element 203 on the basis of a predetermined value and transmits the electric signal to the second piezoelectric element 205. The second piezoelectric element 205 performs vibration damping of the pole piece 201 by receiving the electric signal from the controller 211 and converting the electric signal into the vibration. That is, the second piezoelectric element 205 is vibrated in the -Z direction when the pole piece 201 is vibrated in the +Z direction and the second piezoelectric element 205 is vibrated in the +Z direction when the pole piece 201 is vibrated in the -Z direction.

(Operation and effect)

The magnetic geared rotating electrical machine 10 according to the present disclosure is provided with the second piezoelectric element 205 which is provided in each of the plurality of pole pieces 201 and which converts the vibration of the pole piece into the electric signal and the control unit 204 outputs the electric signal to the second piezoelectric element 205 on the basis of the electric signal output from the first piezoelectric element 203.

In the magnetic geared rotating electrical machine 10, the second piezoelectric element 205 performs vibration damping of the plurality of pole pieces 201 on the basis of the electric signal converted by the first piezoelectric element 203. Accordingly, it is possible to improve the durability of the magnetic geared rotating electrical machine 10.

Other embodiments

Although the embodiment of the magnetic geared rotating electrical machine 10 has been described above, it can also be implemented in the following embodiments.

For example, the magnetic geared rotating electrical machine 10 can be implemented in such a manner that the fixture 202 and the pole piece 201 are sandwiched instead of including the first support ring 206A and the second support ring 206B as shown in FIG. 11. Accordingly, it is possible to manufacture the magnetic geared rotating electrical machine 10 without including the fixture 202 and the like.

Further, the first piezoelectric element 203 and the second piezoelectric element 205 may be provided inside the pole piece 201 instead of the surface of the pole piece 201. That is, the first piezoelectric element 203 and the second piezoelectric element 205 may be provided to be embedded in the pole piece 201.

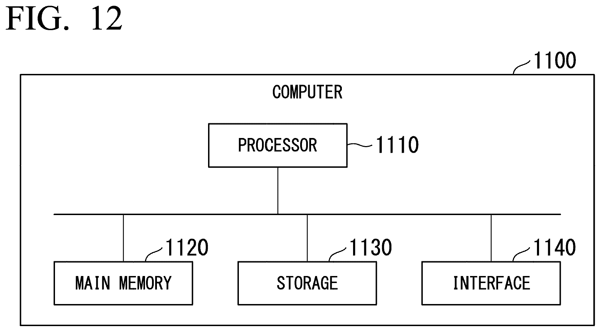

FIG. 12 is a schematic block diagram showing a configuration of a computer according to at least one embodiment.

A computer 1100 includes a processor 1110, a main memory 1120, a storage 1130, and an interface 1140.

The above-described controller 211 is mounted in the computer 1100. Then, the operation of each of the above-described process units is stored in the storage 1130 in a format of the program. The processor 1110 reads out the program from the storage 1130, expands the program in the main memory 1120, and executes the process according to the program. Further, the processor 1110 secures a storage area corresponding to each of the above-described storage units in the main memory 1120 according to the program.

The program may be one for realizing a part of the functions exhibited in the computer 1100. For example, the program may exhibit its function in combination with another program already stored in the storage 1130 or in combination with another program provided in another device. Additionally, in another embodiment, the computer 1100 may include a custom large scale integrated circuit (LSI) such as a programmable logic device (PLD) in addition to the above-described configuration or instead of the above-described configuration. Examples of the PLD include a programmable array logic (PAL), a generic array logic (GAL), a complex programmable logic device (CPLD), and a field programmable gate array (FPGA). In this case, a part or all of the functions realized by the processor 1110 may be realized by the integrated circuit.

Examples of the storage 1130 include magnetic disks, magneto-optical disks, semiconductor memories, and the like. The storage 1130 may be an internal media directly connected to a bus of the computer 1100 or an external media connected to the computer via the interface 1140 or a communication line. Further, when this program is transmitted to the computer 1100 by the communication line, the computer 1100 that receives the program may expand the program in the main memory 1120 and execute the above-described process. At least one embodiment, the storage 1130 is a non-temporary tangible storage medium.

Further, the program may be one for realizing a part of the above-described functions. Furthermore, the program may be a so-called difference file (difference program) that realizes the above-described functions in combination with another program already stored in the storage 1130.

Appendix

The magnetic geared rotating electrical machine 10 described in each embodiment is grasped as follows, for example.

(1) The magnetic geared rotating electrical machine 10 according to the present disclosure includes the stator 100, the low-speed rotor 200 which includes the plurality of pole pieces 201 arranged in the circumferential direction of the stator and is installed inside the stator 100, the high-speed rotor 300 which includes the plurality of second magnets 301 as the magnets facing the plurality of pole pieces 201 and is installed inside the low-speed rotor 200, the first piezoelectric element 203 which is provided in each of the plurality of pole pieces 201 and which converts the vibration into the electric signal, and the control unit 204 which is connected to the first piezoelectric element 203 and performs vibration damping of the pole piece 201 on the basis of the output voltage of the first piezoelectric element 203.

The magnetic geared rotating electrical machine 10 attenuates the vibration of the plurality of pole pieces 201 of the low-speed rotor 200 in the magnetic geared rotating electrical machine 10. Accordingly, it is possible to improve the durability of the magnetic geared rotating electrical machine 10.

(2) Further, in the magnetic geared rotating electrical machine 10, the plurality of first magnets 101 which are arranged in the circumferential direction are installed on the stator 100 or between the stator 100 and the low-speed rotor 200, and each of the first magnets 101 face one of the plurality of second magnets 301.

The magnetic geared rotating electrical machine 10 attenuates the vibration of the plurality of pole pieces 201 of the low-speed rotor 200 of the magnetic geared rotating electrical machine 10 including the first magnet 101 in the stator 100. Accordingly, it is possible to improve the durability of the magnetic geared rotating electrical machine 10.

(3) Further, the first piezoelectric element 203 of the magnetic geared rotating electrical machine 10 is provided in the vicinity of the fixture 202 fixing each of the pole pieces 201 and the low-speed rotor 200.

The first piezoelectric element 203 is provided in the vicinity of the fixture 202 which is a place where the distortion of the pole piece 201 increases. Accordingly, the magnetic geared rotating electrical machine 10 can improve the vibration damping effect of the first piezoelectric element 203.

(4) Further, the magnetic geared rotating electrical machine 10 further includes the electric circuit which is connected to the first piezoelectric element 203 and which is formed as the closed circuit, and the control unit 204 controls the electric circuit so that the electric circuit performs as a reactance that cancels the capacitance component of the first piezoelectric element 203 at the resonance frequency of the pole piece 201 on the basis of the electric signal output from the first piezoelectric element 203.

The magnetic geared rotating electrical machine 10 performs vibration damping according to the resonance frequency of the plurality of pole pieces 201 influencing the durability thereof. Accordingly, it is possible to improve the durability of the magnetic geared rotating electrical machine 10.

(5) Further, the magnetic geared rotating electrical machine 10 further includes the second piezoelectric element 205 which is provided in each of the plurality of pole pieces 201 and which converts the vibration of the pole piece into the electric signal, and the control unit 204 outputs the electric signal to the second piezoelectric element 205 on the basis of the electric signal output from the first piezoelectric element 203.

In the magnetic geared rotating electrical machine 10, the second piezoelectric element 205 performs vibration damping of the plurality of pole pieces 201 on the basis of the electric signal converted by the first piezoelectric element 203. Accordingly, it is possible to improve the durability of the magnetic geared rotating electrical machine 10.

(6) The manufacturing method according to the present disclosure is the manufacturing method for the magnetic geared rotating electrical machine 10 including the stator 100, the low-speed rotor 200 which includes the plurality of pole pieces 201 arranged in the circumferential direction of the stator and is installed inside the stator 100, and the high-speed rotor 300 which includes the plurality of second magnets 301 as the magnets facing the plurality of pole pieces 201 and is installed inside the low-speed rotor 200, the manufacturing method including: providing the piezoelectric element 203 converting the vibration into the electric signal in each of the plurality of pole pieces 201 and providing the control unit 204 connected to the piezoelectric element 203 and performing vibration damping of the pole piece 201 on the basis of the output voltage of the piezoelectric element.

The user of the manufacturing method can attenuate the vibration of the plurality of pole pieces 201 of the low-speed rotor 200 in the magnetic geared rotating electrical machine 10 by using the manufacturing method. Accordingly, it is possible to improve the durability of the magnetic geared rotating electrical machine 10.

Industrial Applicability

The present disclosure relates to a magnetic geared rotating electrical machine and a manufacturing method.

According to the present disclosure, it is possible to improve the durability of the magnetic geared rotating electrical machine by attenuating the vibration of the low-speed rotor in the magnetic geared rotating electrical machine.

Reference Signs List

7 Wiring

9 Current output unit
23 Current source
24 Voltage follower
25 LPF
10 Magnetic geared rotating electrical machine
100 Stator
101 First magnet
200 Low-speed rotor
201 Pole piece
202 Fixture
203 First piezoelectric element
204 Control unit
205 Second piezoelectric element
206 Support ring
211 Controller
212 Pseudo-inductance circuit
300 High-speed rotor
301 Second magnet
400 Rotating shaft
1100 Computer
1110 Processor
1120 Main memory
1130 Storage
1140 Interface
$R_p$ Equivalent resistance component
$R_v$ Resistance
$C_p$ Equivalent capacitance component
$L_v$ Inductance component
$f_r$ Resonance frequency
$f_n$ Natural frequency
$v_1$ Output voltage
$v_a$ Output voltage
$V_p$ Equivalent AC voltage source
$Y_1$ Admittance
$i_1$ Current
$i_s$ Additional current

**Claims**

1.  A magnetic geared rotating electrical machine comprising:

    a stator;
    a low-speed rotor which includes a plurality of pole pieces arranged in a circumferential direction of the stator and is installed inside the stator;
    a high-speed rotor which includes a plurality of second magnets as magnets facing the plurality of pole pieces and is installed inside the low-speed rotor;
    a first piezoelectric element which is provided in each of the plurality of pole pieces and which converts a vibration into an electric signal, and
    a control unit which is connected to the first piezoelectric element and performs vibration damping of the pole piece on the basis of an output voltage of the first piezoelectric element.

2.  The magnetic geared rotating electrical machine according to claim 1,

    wherein the plurality of first magnets which are arranged in the circumferential direction are installed on the stator or between the stator and the low-speed rotor, and
    wherein each of the first magnets face one of the second magnets.

**3.** The magnetic geared rotating electrical machine according to claim 1 or 2,
wherein the first piezoelectric element is provided in the vicinity of a fixture fixing each of the pole pieces and the low-speed rotor.

**4.** The magnetic geared rotating electrical machine according to any one of claims 1 to 3, further comprising:

an electric circuit which is connected to the first piezoelectric element and which is formed as a closed circuit, wherein the control unit controls the electric circuit so that the electric circuit performs as a reactance that cancels a capacitance component of the first piezoelectric element at a resonance frequency of the pole piece on the basis of the electric signal output from the first piezoelectric element.

**5.** The magnetic geared rotating electrical machine according to any one of claims 1 to 4, further comprising:

a second piezoelectric element which is provided in each of the plurality of pole pieces and which converts a vibration of the pole piece into an electric signal,
wherein the control unit outputs an electric signal to the second piezoelectric element on the basis of the electric signal output from the first piezoelectric element.

**6.** A manufacturing method for a magnetic geared rotating electrical machine including a stator, a low-speed rotor which includes a plurality of pole pieces arranged in a circumferential direction of the stator and is installed inside the stator, and a high-speed rotor which includes a plurality of second magnets as magnets facing the plurality of pole pieces and is installed inside the low-speed rotor, the manufacturing method comprising:

providing a piezoelectric element converting a vibration into an electric signal in each of the plurality of pole pieces; and
providing a control unit connected to the piezoelectric element and performing vibration damping of the pole piece on the basis of an output voltage of the piezoelectric element.

FIG. 1

# FIG. 2

# FIG. 3

# FIG. 4

# FIG. 5

FIG. 6

FIG. 7

# FIG. 8

203A       7       204

9

# FIG. 9

```
      START
        │
        ▼
┌──────────────────┐
│ ACQUIRE VOLTAGE  │─── S101
└──────────────────┘
        │
        ▼
┌──────────────────────┐
│ ESTIMATE EQUIVALENT  │─── S102
│ CAPACITANCE COMPONENT│
└──────────────────────┘
        │
        ▼
┌──────────────────┐
│ CALCULATE L VALUE│─── S103
└──────────────────┘
        │
        ▼
┌──────────────────────┐
│ SET VIRTUAL IMPEDANCE│─── S104
└──────────────────────┘
        │
        ▼
┌──────────────────────┐
│ CALCULATE CURRENT VALUE│─── S105
└──────────────────────┘
        │
        ▼
┌──────────────────────┐
│ OUTPUT CURRENT VALUE │─── S106
└──────────────────────┘
        │
        ▼
       END
```

16

# FIG. 10

# FIG. 11

FIG. 12

**INTERNATIONAL SEARCH REPORT**

| International application No. |
| --- |
| PCT/JP2021/000070 |

**A. CLASSIFICATION OF SUBJECT MATTER**
H02K 16/02(2006.01)i; F16F 15/18(2006.01)i
FI: H02K16/02; F16F15/18 A

According to International Patent Classification (IPC) or to both national classification and IPC

**B. FIELDS SEARCHED**

Minimum documentation searched (classification system followed by classification symbols)
H02K16/02; F16F15/18

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 8-13185 B2 (TOSHIBA CORP.) 07 February 1996 (1996-02-07) | 1-6 |
| A | JP 2002-369450 A (TOSHIBA TEC CORPORATION) 20 December 2002 (2002-12-20) paragraphs [0024]-[0038] | 1-6 |
| A | JP 2007-166771 A (TOYOTA MOTOR CORP.) 28 June 2007 (2007-06-28) paragraphs [0032]-[0043] | 1-6 |
| A | CN 207336013 U (HUNAN UNIVER.SITY OF SCIENCE AND TECHNOLOGY) 08 May 2018 (2018-05-08) paragraphs [0033]-[0038], claim 7 | 1-6 |
| A | US 2015/0289056 A1 (AIRBUS DEFENCE AND SPACE GMBH) 08 October 2015 (2015-10-08) | 1-6 |
| A | US 2004/0068349 A1 (LUO HUAGENG) 08 April 2004 (2004-04-08) | 1-6 |

☐ Further documents are listed in the continuation of Box C.    ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 01 March 2021 (01.03.2021) | 09 March 2021 (09.03.2021) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

International application No.

PCT/JP2021/000070

| Patent Documents referred in the Report | Publication Date | Patent Family | Publication Date |
|---|---|---|---|
| JP 8-13185 B2 | 07 Feb. 1996 | (Family: none) | |
| JP 2002-369450 A | 20 Dec. 2002 | (Family: none) | |
| JP 2007-166771 A | 28 Jun. 2007 | (Family: none) | |
| CN 207336013 U | 08 May 2018 | (Family: none) | |
| US 2015/0289056 A1 | 08 Oct. 2015 | EP 2930395 A1 KR 10-2015-0116796 A | |
| US 2004/0068349 A1 | 08 Apr. 2004 | (Family: none) | |

Form PCT/ISA/210 (patent family annex) (January 2015)

**EP 4 075 646 A1**

**Patent documents cited in the description**

- JP 2020005442 A
- JP 2005091103 A